# EUROPÄISCHE PATENTSCHRIFT

(11) **EP 1 337 414 B1**
(45) Veröffentlichungstag und Bekanntmachung des Hinweises auf die Patenterteilung: **09.01.2008**
(21) Anmeldenummer: 01982415.0
(22) Anmeldetag: 09.10.2001
(51) Int. Cl.: B60K 35/00

(54) **MULTIFUNKTIONS-BEDIENEINRICHTUNG**
MULTIFUNCTION OPERATING DEVICE
DISPOSITIF DE COMMANDE MULTIFONCTION

(30) Priorität: 14.11.2000 DE 10056306; 11.08.2001 DE 10139693
(43) Veröffentlichungstag der Anmeldung: 27.08.2003
(73) Patentinhaber: Volkswagen Aktiengesellschaft, 38436 Wolfsburg (DE)
(72) Erfinder: HEIMERMANN, Matthias, 38302 Wolfenbüttel (DE); WENGELNIK, Heino, 38442 Wolfsburg (DE); SCHNIER, Carsten, 38259 Salzgitter (DE)
(86) Internationale Anmeldenummer: PCT/EP2001/011670
(87) Internationale Veröffentlichungsnummer: WO 2002/040307

(56) Entgegenhaltungen:
- EP-A- 0 831 504
- EP-A- 0 940 295
- EP-A- 1 016 566
- DE-A- 19 715 360
- DE-A- 19 843 421

## Beschreibung

Die Erfindung betrifft eine Multifunktions-Bedieneinrichtung, insbesondere für ein Fahrzeug, zur An- und Auswahl von Funktionsgruppen und Funktionen innerhalb einer auf einer Anzeigeeinrichtung darstellbaren Menüstruktur mit mindestens einem bidirektionalen Drehelement.

Bei modernen elektronischen Einrichtungen im Fahrzeug, die ständig zusätzliche Funktionen mit immer mehr Optionen anbieten, sind wegen der Begrenzung des Bauraumes für die dazugehörigen Bedienelemente Multifunktions-Bedienelemente geschaffen worden, mittels derer verschiedene Funktionen der angeschlossenen Einrichtungen bedienbar sind. So ist beispielsweise aus der EP 0 366 132 B1 eine Multifunktions-Bedieneinrichtung für Kraftfahrzeuge bekannt, bei der die Auswahl von Funktionsgruppen (MENÜS) und die Auswahl individueller Funktionen mittels eines Drehschalters erfolgt, und bei der eine ENTER-Funktion auslösbar ist, wobei ein und derselbe bidirektionale Drehschalter zur Menü-Auswahl und individuellen Funktionsauswahl dient. Der besagte Drehschalter weist dabei Raststellungen auf, denen Menüs oder einzelne Funktionen zugeordnet sind, wobei die ENTER-Funktion durch eine Axialbewegung des Drehschalters auslösbar ist. Es dient eine solche Multifunktions-Bedieneinrichtung beispielsweise zur Zieleingabe eines Navigationssystems. Es wird hierzu auf einer Anzeigeeinheit eine alphanumerische Tastatur abgebildet, in der sich der Benutzer mittels der bidirektionalen Bewegung des Drehschalters vor- und zurückbewegen kann. Wenn dann der Cursor sich auf dem gewünschten alphanumerischen Zeichen befindet, kann dieses durch eine Axialbewegung des Drehschalters ausgewählt und in das Navigationssystem übernommen werden. Desweiteren ist aus der DE 199 41 960 weiterhin bekannt, das Bedienelement als bidirektional um seine Längsachse rotierbaren Zylinder auszubilden, der federnd zur Längsachse bewegbar ist.

JP-A-11203985 zeigt eine Multifunktions-Bedieneinrichtung mit den Merkmalen des Obergriffs des Anspruchs 1.

Der Erfindung liegt die Aufgabe zugrunde, eine Multifunktions-Bedieneinrichtung zu schaffen, die noch komfortabler bedient werden kann und durch die die Haptik der Bedienung weiter vereinfacht wird.

Die gestellte Aufgabe wird mit den Merkmalen des Anspruchs 1 gelöst. Vorteilhafte Aus- und Weiterbildungen sind in den Unteransprüchen dargestellt.

Erfindungsgemäß ist vorgesehen, daß das bidirektionale Drehelement mit einer weitgehendst parallel zu einer Fahrzeugteil-Oberfläche verlaufenden Drehachse ausgebildet ist. Mit Hilfe des bidirektionalen Drehelementes erfolgt eine bidirektionale An- und Auswahl von Funktionsgruppen und/oder Funktionen innerhalb einer Menüebene. Die Auswahl der Menüebenen erfolgt über eine zweite Bedieneinrichtung.

Dabei kann die zweite Bedieneinrichtung durch Verschiebung zumindest eines Teils des bidirektionalen Drehelementes parallel zur Drehachse des bidirektionalen Drehelementes realisiert werden. Eine weitere Variante sieht vor, das bidirektionale Drehelement zur Bildung der zweiten Bedieneinrichtung in Richtung der Drehachse als Wippe auszubilden.

Die zweite Bedieneinrichtung weist zwei Bedienelemente auf, die parallel zur Drehachse des bidirektionalen Drehelementes betätigbar sind. Die zweite Bedieneinrichtung kann am oder zumindest teilweise im bidirektionalen Drehelement angeordnet sein und mit dem Drehelement eine bauliche Einheit, bilden.

Nach einer bevorzugten Ausbildung der Erfindung ist das bidirektionale Drehelement zur An- und/oder Auswahl in zwei Richtungen auf der Anzeigeeinrichtung und die zweite Bedieneinrichtung zur Auswahl in zwei weiteren Richtungen, vorzugsweise senkrecht zu den Auswahlrichtungen des bidirektionalen Drehelementes vorgesehen.

Gemäß einer Weiterbildung der Erfindung besteht die zweite Bedieneinrichtung aus je einem Bedienelement für je eine Auswahlrichtung.

Vorzugsweise ist das bidirektionale Drehelement so im Fahrzeug und in Bezug der Anzeigeeinrichtung angeordnet, daß eine Auswahl von Funktionsgruppen und Funktionen auf der Anzeigeeinrichtung sinnfähig zu den Drehrichtungen des bidirektionalen Drehelementes erfolgt.

Nach einer vorteilhaften Ausbildung ist vorgesehen, daß nach An- und/oder Auswahl mindestens einer Funktion durch eine Drehbetätigung des bidirektionalen Drehelementes über die Betätigung der zweiten Bedieneinrichtung eine Aktivierung der Funktion durchführbar ist. Es ist insbesondere bei sicherheitsrelevanten bzw. gebührenpflichtigen Funktionen, wie die Anwahl einer Telefonnummer, sinnvoll, eine bewußte Aktivierung dieser Funktionen vorzusehen, um ein unbewußtes Auslösen solcher Funktionen zu vermeiden.

Das bidirektionale Drehelement ist vorteilhafterweise als großformatiges Stellrad ausgebildet, so daß es leicht, auch ohne oder mit geringem Blickkontakt des Benutzers erfaßt und haptisch leicht, beispielsweise mit dem Handballen, betätigt werden kann.

Zumindest bei einzelnen Funktionsgruppen und/oder Funktionen kann vorgesehen sein, daß nach Anwahl der Funktionsgruppe und/oder Funktion eine automatische Auswahl und/oder Aktivierung der angewählten Funktionsgruppen und/oder Funktion erfolgt. Zur Sicherstellung, daß die Funktionsgruppe und/oder Funktion tatsächlich angewählt wurde, ist nach einer Weiterbildung vorgesehen, daß die automatische Auswahl und/oder Aktivierung der angewählten Funktionsgruppe und/oder Funktion erst erfolgt, wenn nach der Anwahl eine definierte Zeitspanne verstrichen ist.

In weiterer vorteilhafter Ausgestaltung ist angegeben, daß in direkter haptischer Nähe neben dem bidirektionalen Bedienelement weitere Schalter und/oder Drucktaster angeordnet sind. In haptischer Nähe bedeutet hierbei, daß mit den Fingern derselben Hand, mit der das bidirektionale Bedienelement bzw. das Drehbetätigungsrad gescrollt werden kann, auch gleichzeitig Tastschalter betätigbar sind. Hierdurch können einzelne vordefinierte Auswahlfunktionen auf der Anzeigeeinrichtung, die durch das Scrollen ansteuerbar sind, ausgewählt werden.

Desweiteren können zur Auswahl von primären Funktionsgruppen, insbesondere zur Auswahl von einzelnen angeschlossenen Einrichtungen und/oder Gruppen von Einrichtungen, den primären Funktionsgruppen individuell zugeordnete Bedienelemente, beispielsweise Tastschalter, vorgesehen sein.

Nach einer Weiterbildung der Erfindung ist das bidirektionale Drehelement in einem solchen Maße in einer Fahrzeugteil-Oberfläche versenkt, daß das Drehelement gut bedienbar und die Drehachse bereits unterhalb der Fahrzeugteil-Oberfläche liegt.

In einer vorteilhaften Ausgestaltung ist angegeben, daß das bidirektionale Bedienelement gemeinsam mit der zweiten Bedieneinrichtung räumlich baulich, aber nicht funktionell von der Anzeigeeinrichtung getrennt angeordnet ist. Hierdurch ist es möglich, die Anzeigeeinrichtung in einer optimalen optischen Erfassungsposition für die Insassen anzuordnen. Davon unabhängig ist die Bedieneinrichtung in der optimalen haptischen Bedienposition untergebracht. Es ergibt sich zwangsläufig, daß eine optimale optische Erfassungsposition nicht unbedingt die optimale haptische Position für die Betätigung der Multifunktions-Bedieneinrichtung ist. Aus diesem Grund ist genau diese Separierung zwischen Anzeige- und Bedieneinrichtung vorteilhaft, weil zum einen die optische und zum anderen die haptische Position jeweils nur für sich optimiert angeordnet werden kann.

Die vorliegende Erfindung ist in den Figuren der Zeichnung in mehreren Ausführungsbeispielen dargestellt. Es zeigen:
- Fig. 1:: eine schematische perspektivische Darstellung einer in der Armauflage oder einer Mittelkonsole eines Fahrzeuges und in dem Lenkrad desselben angeordneten erfindungsgemäßen Multifunktions-Bedieneinrichtung
- Fig. 2:: die schematische Darstellung einer in der Armauflage oder einer Mittelkonsole eines Fahrzeuges eingebauten erfindungsgemäßen Multifunktions-Bedieneinrichtung
- Fig. 3:: die schematische Darstellung einer in der Instrumententafel eines Fahrzeuges angeordneten erfindungsgemäßen Multifunktions-Bedieneinrichtung
- Fig. 4:: eine weitere Ausführungsform der erfindungsgemäßen Multifunktions-Bedieneinrichtung
- Fig. 5:: eine perspektivische Darstellung der Bedieneinrichtung 10
- Fig. 6:: ein Funktionsbeispiel der erfindungsgemäßen Multifunktions-Bedieneinrichtung anhand einer Telefon-Bedienung
- Fig. 7:: ein weiteres Funktionsbeispiel anhand einer Telefon-Bedienung und
- Fig. 8: ein Funktionsbeispiel anhand eines AUDIO-Menüs

Die erfindungsgemäße Multifunktions-Bedieneinrichtung mit der Anzeigeeinrichtung 14 und der Bedieneinrichtung 10 ist zur Auswahl von Funktionsgruppen (Menüs) und individuellen Funktionen innerhalb einer auf der Anzeigeeinrichtung 14 derselben Menüstruktur ausgebildet.

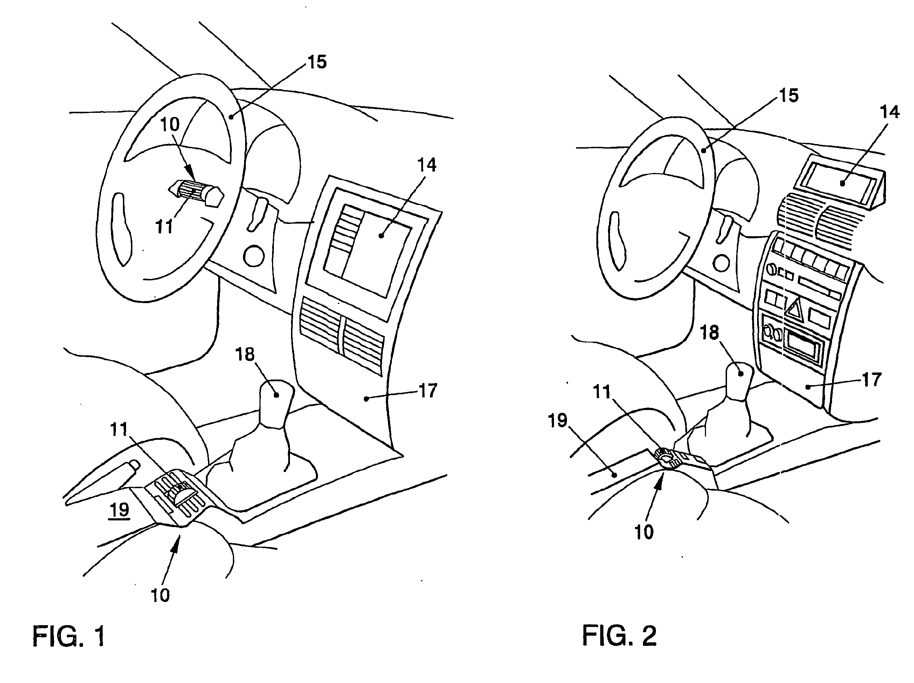

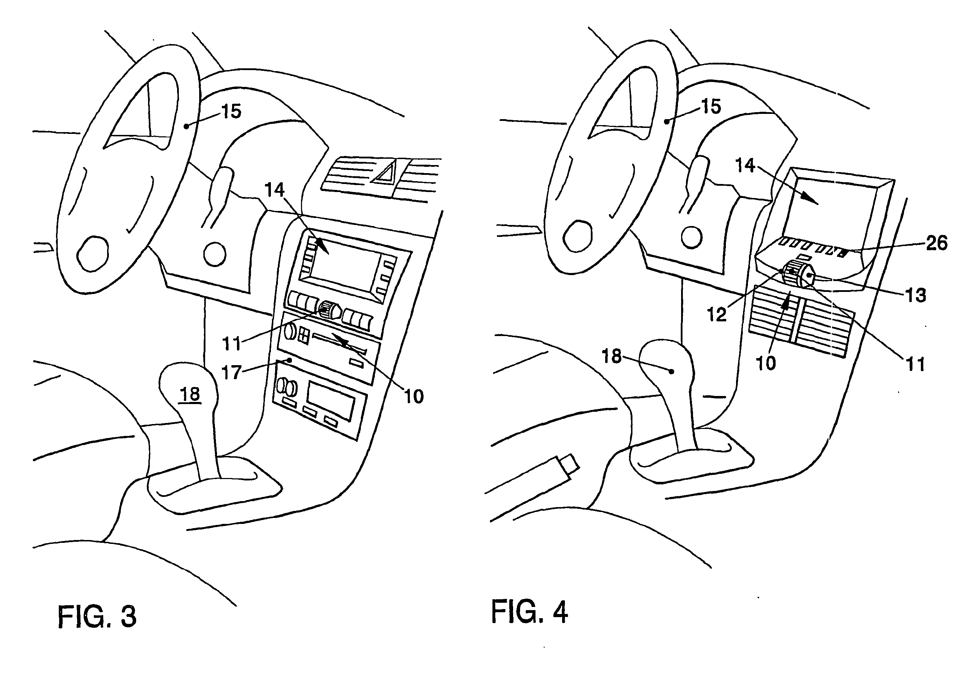

Die Bedieneinrichtung 10 kann z. B. in einem Lenkrad 15 eines Fahrzeuges angeordnet sein, siehe z. B. die Fig. 1 der Zeichnung. Alternativ oder ergänzend kann die erfindungsgemäße Bedieneinrichtung 10 in einer Instrumententafel 17 des Fahrzeuges angeordnet sein, siehe z. B. die Fig. 3 oder 4 der Zeichnung. Alternativ oder ergänzend ist auch möglich, daß die Bedieneinrichtung 10 in einer Mittelkonsole oder Armauflage 19 oder einem Schaltknüppel 18 eines Fahrzeuges angeordnet ist. Es wird dazu auf die Fig. 1 und 2 der Zeichnung hingewiesen.

In der Fig. 1 der Zeichnung ist die Bedieneinrichtung 10, die mit der Anzeigeeinrichtung 14 die erfindungsgemäße Multifunktions-Bedieneinrichtung bildet, sowohl im Lenkrad 15 als auch in der Armauflage 19 bzw. der Mittelkonsole eins Fahrzeuges angeordnet. In der Fig. 2 ist die Bedieneinrichtung 10 ausschließlich in der Armauflage bzw. der Mittelkonsole des Fahrzeuges angeordnet.

Bei Ausführungsformen, bei denen die Bedieneinrichtung 10 im Bereich der Armauflage 19 angeordnet ist, siehe z. B. die Fig. 2, ist das bidirektionale Drehelement 11 der Bedieneinrichtung 10 als großformatiges Stellrad ausgebildet.

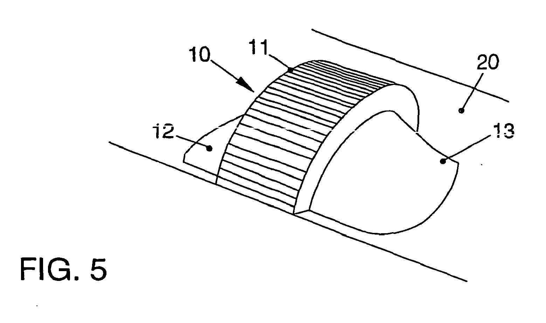

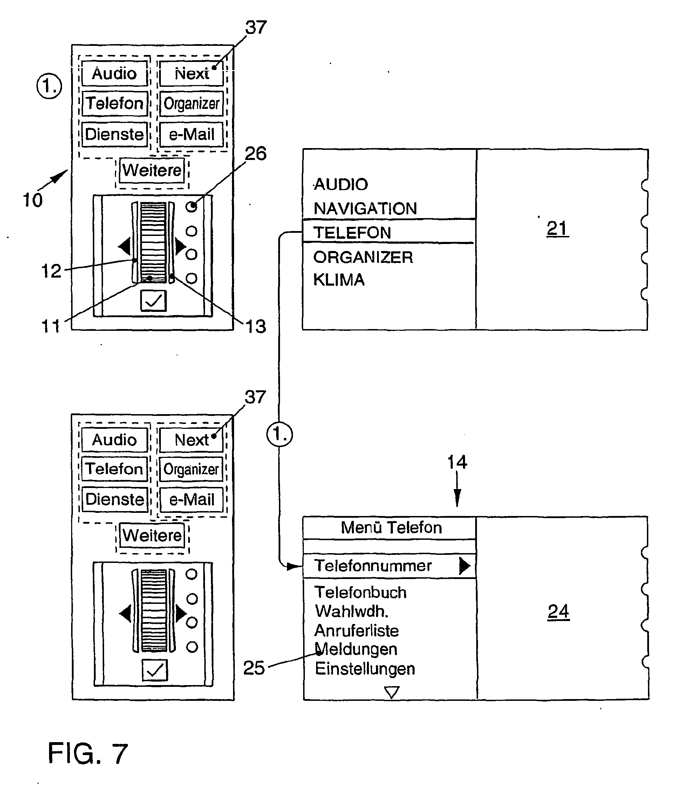

In Fig. 5 ist die Bedieneinrichtung 10 als Baueinheit näher dargestellt. Die Bedieneinrichtung 10 weist ein aus der Fahrzeugteil-Oberfläche ragendes bidirektionales Drehelement 11 auf, das gegebenenfalls Raststellungen zur haptischen Funktions- und Funktionsgruppenauswahl besitzt, die in Abhängigkeit der in einer Menüebene vorhandenen Funktionsgruppen und/oder Funktionen programmierbar sein können. Die Fahrzeugteil-Oberfläche 20 kann beispielsweise durch die Oberseite einer Mittelkonsole bzw. einer Armlehne 19 (Fig. 1 und 2) eines Lenkrades 15 (Fig. 1) oder der Instrumententafel 17 sein.

Das als Drehbetätigungsrad ausgestattete bidirektionale Drehelement 11 ist dabei liegend in Bezug auf die Fahrzeugteil-Oberfläche 20 angeordnet, so daß die Drehachse die Drehbetätigungswalze bzw. des Drehelementes 11 in der Ebene, also horizontal liegt. Durch die liegende Drehachse mit einer Orientierung, daß das bidirektionale Drehelement 11 in den Richtungen wie die Aus- und Anwahlrichtungen auf der Anzeigeeinrichtung 14 drehbar bzw. sozusagen rollbar ist, ergibt sich eine günstige Drehbetätigbarkeit des bidirektionalen Drehelementes 11. Die Drehbetätigungswalze bzw. das bidirektionale Drehelement 11 ist mit seiner Drehachse vorteilhafterweise so eingebaut, daß diese unterhalb der Fahrzeugteil-Oberfläche 20 angeordnet ist. Das heißt, die Drehbetätigungswalze kann ein absolut rund ausgeführtes Element sein, dessen Drehachse und Drehachsenaufhängung unterhalb der Fahrzeugteil-Oberfläche 20 bzw. der Bedienebene verborgen anzuordnen ist.

Seitlich von der Drehbetätigungswalze ist eine zweite Bedieneinrichtung 12 und 13 angeordnet. Die zweite Bedieneinrichtung 12, 13 kann beispielsweise aus zwei parallel zur Drehachse des bidirektionalen Drehelementes 11 betätigbaren Tastenelementen bestehen.

Eine andere Variante der erfindungsgemäßen Multifunktions-Bedieneinrichtung weist eine einteilige oder zweiteilige Bedieneinrichtung 12, 13 auf, die zumindest in dem im wesentlichen als Ring oder mit ringförmigen Flanken ausgebildetes bidirektionales Drehelement 11 angeordnet ist.

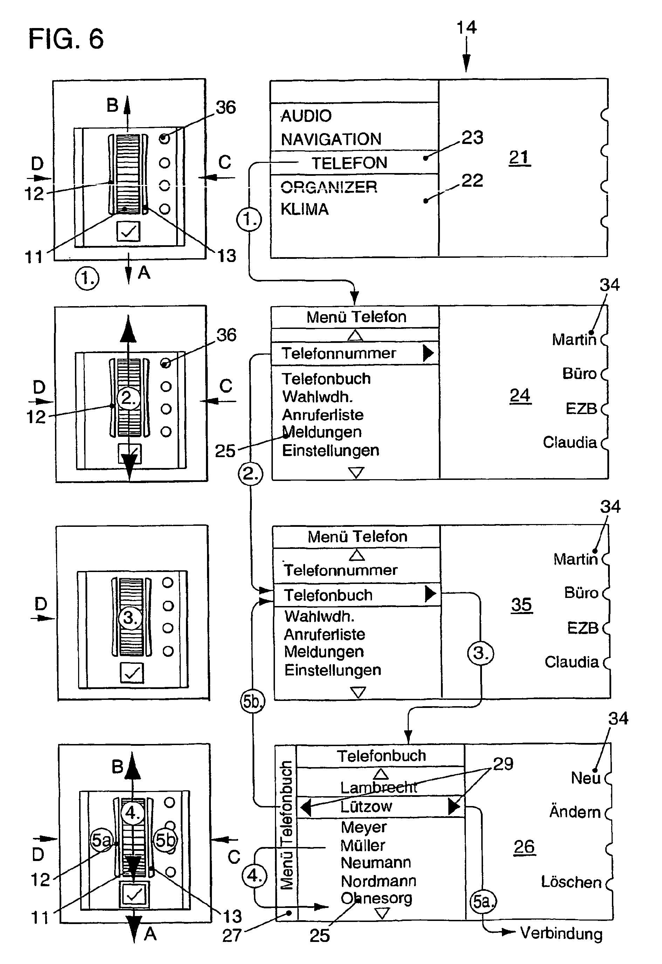

Fig. 6 zeigt ein Beispiel für die Funktionsweise der erfindungsgemäßen Multifunktions-Bedieneinrichtung. Wie bereits ausgeführt, besteht im wesentlichen die Multifunktions-Bedieneinrichtung aus dem bidirektionalen Drehelement 11 und der zweiten Bedieneinrichtung 12, 13, welche mit der örtlich getrennt in der Instrumententafel 17 angeordneten Anzeigeeinrichtung 14 zusammenwirken.

Nach dem Einschalten der Multifunktions-Bedieneinrichtung erscheint auf der Anzeigeeinrichtung 14 ein Hauptmenü 21 mit einer Anzahl von Funktionsgruppen 22 bzw. angeschlossener Geräte. Im Ausführungsbeispiel sind dies ein oder mehrere Audio-Einrichtungen, eine Telefonanlage, eine Navigationseinrichtung, ein Organisationsprogramm sowie eine Klimaanlage. Über de Drehbewegung des bidirektionalen Drehelementes 11 in Richtung A springt die Auswahlmarkierung 23 von der Funktionsgruppe 22 "AUDIO" zur Funktionsgruppe "TELEFON". Nach Ablauf einer vordefinierten Zeitspanne, die sicherstellt, daß die Funktionsgruppe "TELEFON" auch tatsächlich die gewünschte Funktionsgruppe 22 ist, wird diese ausgewählt und auf der Anzeigeeinrichtung 14 wird das Telefonmenü 24 dargestellt (Schritt 1). Über die Betätigung des Drehelementes 11 in Richtung A oder B kann zwischen verschiedenen Funktionen 25 ausgewählt werden. Hier wurde über Schritt 2 das Telefonbuch ausgewählt. Durch Betätigung des Bedienelementes 12 in Richtung D springt die Anzeige der Anzeigeeinrichtung 14 in das Untermenü 26 des Telefonbuches (Schritt 3). Hier kann wiederum durch die Drehbewegung des Drehelementes 11 eine Funktion 25 ausgewählt werden (Schritt 4). Bei dieser Funktion handelt es sich um eine kostenpflichtige Funktion, so daß die Aktivierung erst durch eine Betätigung des Bedienelementes 12 in Richtung D erfolgt (Schritt 5a). Über die Betätigung des Bedienelementes 13 in Richtung C gelangt der Nutzer wieder in eine übergeordnete Menüebene (Schritt 5b). Über die erfinderische bildliche Darstellung 27 und 28 kann ein Nutzer sofort erkennen, wieviele übergeordnete Menüebenen existieren. Der Pfeil 29 zeigt an, daß unter und/oder über der gewählten Menüebene zumindest für diese Funktion oder Funktionsgruppe weitere Menüebenen existieren.

In den Menüebenen 24 und 26 sind am rechten Rand der Anzeigeeinrichtung 14 symbolische Bedienelemente 34 dargestellt, diese korrespondieren mit den tatsächlichen Bedienelementen 36, welche als sogenannte Softkeys gebildet sind. Den Bedienelementen 36 werden je nach Menüebene bzw. Menüzweig unterschiedliche ausgewählte Funktionen zugeordnet.

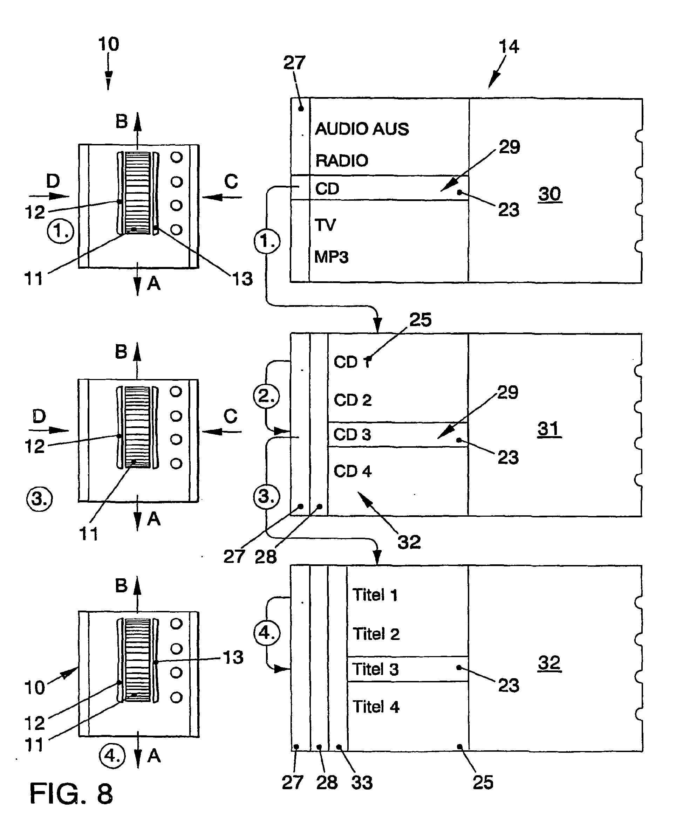

Die in Fig. 7 dargestellte Bedieneinrichtung 10 umfaßt neben dem bidirektionalen Drehelement 11, den zweiten Bedienelementen 12, 13 und den Softkeys 36 weitere Bedienelemente 37, welche beispielsweise als Drucktaster ausgebildet sind. Die Bedienelemente 37 sind jeweils speziellen primären Funktionsgruppen 22 zugeordnet. Diese primären Funktionsgruppen können einmal das Bedienmenü einzelner angeschlossener Einrichtungen, wie beispielsweise Radio, Navigationseinrichtung, oder Gruppen von Einrichtungen sein. So sind zum Beispiel unter AUDIO die Bedienmenüs mehrerer AUDIO-Geräte zusammengefaßt. Aufgrund der Bedienelemente 37 unterscheidet sich die Funktionsweise der Multifunktions-Bedieneinrichtung geringfügig von der von Fig. 6. Möchte der Benutzer eine der im Hauptmenü 21 aufgezählten und angeschlossenen Einrichtungen bedienen, so betätigt er das entsprechende Bedienelement 37, hier das Bedienelement für die Telefoneinrichtung. Die Anzeigeeinrichtung 14 zeigt dann sofort das Telefonmenü 24. Im folgenden erfolgt die Bedienung analog zu Fig. 6.

Das in Figur 8 gezeigte Audiomenü 30 umfaßt die Bedienung mehrerer Audiogeräte, wie Radio, CD-Wechsler, TV und einen MP3-Player. Zusätzlich ist noch eine Funktion "AUDIO-GERÄTE-AUS" vorgesehen. Über die Drehbetätigung in Richtung A oder B des Drehelementes 11 wird auch hier wiederum eine Funktionsgruppe 22 an- und ausgewählt, die Auswahlmarkierung 29 steht auf der ausgewählten Funktionsgruppe. In Figur 3 ist es der CD-Wechsler.

Der erschienene Pfeil 29 innerhalb der Auswahlmarkierung zeigt an, daß zu der Funktionsgruppe weitere Untermenüs existieren, die durch die Betätigung des Bedienelementes 12 in Richtung D angewählt werden können.

Der Balken 27 auf der Anzeigeeinrichtung 14 zeigt an, daß das Audiomenü 30 nicht das Hauptmenü der Multifunktions-Bedieneinrichtung ist. Zum Hauptmenü kann mit Hilfe der Betätigung des Bedienelementes 13 in Richtung C gesprungen werden.

Wird nun das Bedienelement 12 in Richtung D betätigt, springt die Anzeige in die darunterliegende Menüebene, es erscheint auf der Anzeigeeinrichtung 14 das Menübild 31. Wesentlich und erfinderisch ist hierbei, daß über die Anzeigebalken 27, 28 angegeben wird, daß der Nutzer sich in der dritten Menüebene befindet, also zwei übergeordnete Ebenen existieren. Der Pfeil 32 zeigt an, daß nicht alle Funktionen 25 dieser Menüebene auf der Anzeigevorrichtung 14 momentan dargestellt sind.

Durch die Drehbetätigung des Drehelementes 11 werden diese Funktionen in die Anzeige geholt.

Auch hier läßt sich wiederum durch die Drehbewegung des Drehelementes 11 in Richtung A oder B eine Funktion, hier speziell eine vorhandene CD an- und auswählen (Schritt 2) und mit Hilfe der Betätigung des Bedienelementes 12 in Richtung D wird wiederum in das darunterliegende Menü 32 gesprungen (Schritt 3), dessen Ebene jetzt durch die Balken 27, 28 und 33 angezeigt wird.

Bei An- und Auswahl eines Titels (Funktion) 25 durch die Drehbetätigung des Drehelementes 11 wird der CD-Wechsler zugleich aktiviert und der Nutzer kann diesen Titel hören.

## Patentansprüche

1. Multifunktions-Bedieneinrichtung, insbesondere für ein Fahrzeug, zur An- und/oder Auswahl von Funktionsgruppen (22) und Funktionen (25) innerhalb einer auf einer Anzeigeeinrichtung darstellbaren Menüstruktur mit mindestens einem bidirektionalen Drehelement (11), wobei das bidirektionale Drehelement (11) zur An- und/oder Auswahl von Funktionsgruppen (22) und/oder Funktionen (25) innerhalb einer Menüebene (21, 24, 26, 30-32) ausgebildet ist, und mindestens einer zweiten Bedieneinrichtung (12, 13) zur An- und/oder Auswahl der Menüebenen (21, 24, 26, 30-32), **dadurch gekennzeichnet, dass** die zweite Bedieneinrichtung (12, 13) zwei parallel zur Drehachse des bidirektionalen Drehelements (11) betätigbare Tastelemente umfasst.

2. Multifunktions-Bedieneinrichtung nach Anspruch 1, **dadurch gekennzeichnet, daß** die zweite Bedieneinrichtung (12, 13) durch eine Verschiebung zumindest eines Teils des bidirektionalen Drehelementes parallel zur Drehachse des bidirektionalen Drehelementes realisiert ist.

3. Multifunktions-Bedieneinrichtung nach Anspruch 1, **dadurch gekennzeichnet, daß** die zweite Bedieneinrichtung (12, 13) aus zwei Bedienelementen besteht, wobei die zweite Bedieneinrichtung am oder zumindest teilweise im bidirektionalem Drehelement (11) angeordnet ist.

4. Multifunktions-Bedieneinrichtung nach einem der Ansprüche 1 bis 3, **dadurch gekennzeichnet, daß** das bidirektionale Drehelement (11) zur An- und/oder Auswahl in zwei Richtungen (A, B) und die zweite Bedieneinrichtung zur Auswahl in zwei weiteren Richtungen (C, D), vorzugsweise senkrecht zu den Auswahleinrichtungen des bidirektionalen Drehelementes (11) vorgesehen ist.

5. Multifunktions-Bedieneinrichtung nach Anspruch 4, **dadurch gekennzeichnet, daß** die zweite Bedieneinrichtung aus je einem Bedienelement (12, 13) für je eine An- und/oder Auswahlrichtung besteht.

6. Multifunktions-Bedieneinrichtung nach einem der Ansprüche 1 bis 5, **dadurch gekennzeichnet, daß** das, bidirektionale Drehelement (11) derart im Fahrzeug angeordnet ist, daß eine Auswahl von Funktionsgruppen (22) und Funktionen (25) auf der Anzeigeeinrichtung (14) sinnfällig zu den Drehrichtungen (A, B) des bidirektionalen Drehelementes (11) durchführbar ist.

7. Multifunktions-Bedieneinrichtung nach einem der Ansprüche 1 bis 6, **dadurch gekennzeichnet, daß** nach An- und/oder Auswahl mindestens einer Funktion (25) durch eine Drehbetätigung des bidirektionalen Drehelementes (11) über die Betätigung der zweiten Bedieneinrichtung (12, 13) eine Aktivierung der Funktion (25) durchführbar ist.

8. Multifunktions-Bedieneinrichtung nach einem der Ansprüche 1 bis 7, **dadurch gekennzeichnet, daß** das bidirektionale Drehelement (11) als großformatiges Stellrad ausgebildet ist.

9. Multifunktions-Bedieneinrichtung nach einem der Ansprüche 1 bis 8, **dadurch gekennzeichnet, daß** zumindest bei einer der durch das bidirektionale Drehelement (11) angewählten Funktionsgruppen (22) und/oder Funktionen (25) eine automatische Auswahl und/oder Aktivierung der angewählten Funktionsgruppe (22) und/oder Funktion (25) erfolgt.

10. Multifunktions-Bedieneinrichtung nach Anspruch 9, **dadurch gekennzeichnet, daß** nach Anwahl einer Funktionsgruppe (22) und/oder Funktion (25) und dem Ablauf einer vorgegebenen Zeitdauer eine automatische Auswahl und/oder Aktivierung der angewählten Funktionsgruppe (22) und/oder Funktion (25) erfolgt.

11. Multifunktions-Bedieneinrichtung nach einem der Ansprüche 1 bis 10, **dadurch gekennzeichnet, daß** in haptischer Nähe neben dem bidirektionalen Drehelement (11) weitere Bedienelemente (36) angeordnet sind.

12. Multifunktions-Bedieneinrichtung nach Anspruch 11, **dadurch gekennzeichnet, daß** die Bedienelemente (36) als Softkeys zur Auswahl und/oder Aktivierung von vordefinierten angewählten Funktionen (25) vorgesehen sind.

13. Multifunktions-Bedieneinrichtung nach einem der Ansprüche 1 bis 12, **dadurch gekennzeichnet, daß** zur Auswahl von primären Funktionsgruppen (22), insbesondere zur Auswahl von angeschlossenen Einrichtungen und/oder Gruppen von Einrichtungen, den primären Funktionsgruppen (22) individuell zugeordnete Bedienelemente (37) vorgesehen sind.

14. Multifunktions-Bedieneinrichtung nach einem der Ansprüche 1 bis 13, **dadurch gekennzeichnet, daß** das bidirektionale Drehelement (11) in einem solchen Maße in einer Fahrzeugteil-Oberfläche (20) versenkt ist, daß das Drehelement (11) gut bedienbar und die Drehachse bereits unterhalb der Fahrzeugteil-Oberfläche (20) liegt.

15. Multifunktions-Bedieneinrichtung nach einem der Ansprüche 1 bis 14, **dadurch gekennzeichnet, daß** das bidirektionale Drehelement (11) zusammen mit mindestens der zweiten Bedieneinrichtung (12, 13) räumlich und baulich von der Anzeigeeinrichtung getrennt ist.

## Claims

1. Multifunction operating device, in particular for a vehicle, for selecting and/or choosing function groups (22) and functions (25) within a menu structure which can be displayed on a display device, having at least one bidirectional rotating element (11), wherein the bidirectional rotating element (11) is designed to select and/or choose function groups (22) and/or functions (25) within a menu level (21, 24, 26, 30-32), and at least a second operating device (12, 13) for selecting and/or choosing the menu levels (21, 24, 26, 30-32), **characterized in that** the second operating device (12, 13) comprises two momentary contact switch elements which can be activated parallel to the rotational axis of the bidirectional rotating element (11) .

2. Multifunction operating device according to Claim 1, **characterized in that** the second operating device (12, 13) is implemented by sliding at least part of the bidirectional rotating element parallel to the rotational axis of the bidirectional rotating element.

3. Multifunction operating device according to Claim 1, **characterized in that** the second operating device (12, 13) is composed of two operating elements, wherein the second operating device is arranged on or at least partially in the bidirectional rotating element (11).

4. Multifunction operating device according to one of Claims 1 to 3, **characterized in that** the bidirectional rotating element (11) is provided for selecting and/or choosing in two directions (A, B), and the second operating device is provided for choosing in two further directions (C, D), preferably perpendicularly with respect to the choosing devices of the bidirectional rotating element (11).

5. Multifunction operating device according to Claim 4, **characterized in that** the second operating device is composed of in each case one operating element (12, 13) for in each case one selection and/or choosing direction.

6. Multifunction operating device according to one of Claims 1 to 5, **characterized in that** the bidirectional rotating element (11) is arranged in the vehicle in such a way that function groups (22) and functions (25) on the display device (14) can be chosen in a way which corresponds intuitively to the rotational directions (A, B) of the bidirectional rotating element (11).

7. Multifunction operating device according to one of Claims 1 to 6, **characterized in that** after at least one function (25) has been selected and/or chosen said function (25) can be activated by rotational activation of the bidirectional rotating element (11) by activating the second operating device (12, 13).

8. Multifunction operating device according to one of Claims 1 to 7, **characterized in that** the bidirectional rotating element (11) is embodied as a large-format actuating wheel.

9. Multifunction operating device according to one of Claims 1 to 8, **characterized in that** at least in the case of one of the function groups (22) and/or functions (25) which has been selected by means of the bidirectional rotating element (11), the selected function group (22) and/or function (25) is automatically chosen and/or activated.

10. Multifunction operating device according to Claim 9, **characterized in that** after a function group (22) and/or function (25) has been selected and a predefined time period has expired, the selected function group (22) and/or function (25) is chosen and/or activated automatically.

11. Multifunction operating device according to one of Claims 1 to 10, **characterized in that** further operating elements (36) are arranged in the haptic vicinity of the bidirectional rotating element (11).

12. Multifunction operating device according to Claim 11, **characterized in that** the operating elements (36) are provided as soft keys for choosing and/or activating predefined, selected functions (25).

13. Multifunction operating device according to one of Claims 1 to 12, **characterized in that** operating elements (37) which are individually assigned to the primary function groups (22) are provided for choosing primary function groups (22), in particular for choosing connected devices and/or groups of devices.

14. Multifunction operating device according to one of Claims 1 to 13, **characterized in that** the bidirectional rotating element (11) is countersunk in the surface (20) of a vehicle component to such an extent that the rotating element (11) can be operated satisfactorily and the rotational axis is already located underneath the surface (20) of the vehicle component.

15. Multifunction operating device according to one of Claims 1 to 14, **characterized in that** the bidirectional rotating element (11), together with at least the second operating device (12, 13), is spatially and structurally separate from the display device.

## Revendications

1. Dispositif de commande multifonction, en particulier pour un véhicule, pour le choix et/ou la sélection de groupes de fonctions (22) et de fonctions (25) à l'intérieur d'une structure de menu pouvant être représentée sur un dispositif d'affichage, avec au moins un élément rotatif bidirectionnel (11), dans lequel l'élément rotatif bidirectionnel (11) est conçu pour le choix et/ou la sélection de groupes de fonctions (22) et/ou de fonctions (25) à l'intérieur d'un plan de menu (21, 24, 26, 30-32), et avec au moins un deuxième dispositif de commande (12, 13) pour le choix et/ou la sélection des plans de menu (21, 24, 26, 30-32), **caractérisé en ce que** le deuxième dispositif de commande (12, 13) comprend deux éléments à touches actionnables parallèlement à l'axe de rotation de l'élément rotatif bidirectionnel (11).

2. Dispositif de commande multifonction selon la revendication 1, **caractérisé en ce que** le deuxième dispositif de commande (12, 13) est réalisé par un déplacement d'au moins une partie de l'élément rotatif bidirectionnel parallèlement à l'axe de rotation de l'élément rotatif bidirectionnel.

3. Dispositif de commande multifonction selon la revendication 1, **caractérisé en ce que** le deuxième dispositif de commande (12, 13) se compose de deux éléments de commande, dans lequel le deuxième dispositif de commande est disposé sur ou au moins partiellement dans l'élément rotatif bidirectionnel (11).

4. Dispositif de commande multifonction selon l'une quelconque des revendications 1 à 3, **caractérisé en ce que** l'élément rotatif bidirectionnel (11) est prévu pour le choix dans deux directions (A, B) et le deuxième dispositif de commande est prévu pour le choix et/ou la sélection dans deux autres directions (C, D), de préférence perpendiculaires aux directions de sélection de l'élément rotatif bidirectionnel (11).

5. Dispositif de commande multifonction selon la revendication 4, **caractérisé en ce que** le deuxième dispositif de commande se compose chaque fois d'un élément de commande (12, 13) pour chaque direction de choix et/ou de sélection.

6. Dispositif de commande multifonction selon l'une quelconque des revendications 1 à 5, **caractérisé en ce que** l'élément rotatif bidirectionnel (11) est disposé dans le véhicule de telle manière que l'on puisse opérer une sélection de groupes de fonctions (22) et de fonctions (25) sur le dispositif d'affichage (14) de manière évidente vers les directions de rotation (A, B) de l'élément rotatif bidirectionnel (11).

7. Dispositif de commande multifonction selon l'une quelconque des revendications 1 à 6, **caractérisé en ce que** l'on peut effectuer une activation de la fonction (25) après le choix et/ou la sélection d'au moins une fonction (25) par un actionnement rotatif de l'élément rotatif bidirectionnel (11) en actionnant le deuxième dispositif de commande (12, 13).

8. Dispositif de commande multifonction selon l'une quelconque des revendications 1 à 7, **caractérisé en ce que** l'élément rotatif bidirectionnel (11) est une roue de réglage de grand format.

9. Dispositif de commande multifonction selon l'une quelconque des revendications 1 à 8, **caractérisé en ce que**, au moins pour un des groupes de fonctions (22) et/ou au moins une des fonctions (25) choisi(e)s par l'élément rotatif bidirectionnel (11), on effectue une sélection et/ou une activation automatique du groupe de fonctions choisi (22) et/ou de la fonction (25) choisie.

10. Dispositif de commande multifonction selon la revendication 9, **caractérisé en ce que**, après le choix d'un groupe de fonctions (22) et/ou d'une fonction (25) et l'expiration d'une durée prédéterminée, on effectue une sélection et/ou une activation automatique du groupe de foncions (22) choisi et/ou de la fonction (25) choisie.

11. Dispositif de commande multifonction selon l'une quelconque des revendications 1 à 10, **caractérisé en ce que** d'autres éléments de commande (36) sont disposés à proximité haptique, en plus de l'élément rotatif bidirectionnel (11).

12. Dispositif de commande multifonction selon la revendication 11, **caractérisé en ce que** les éléments de commande (36) sont prévus sous la forme de touches programmables pour la sélection et/ou l'activation de fonctions choisies prédéfinies (25).

13. Dispositif de commande multifonction selon l'une quelconque des revendications 1 à 12, **caractérisé en ce qu'**il est prévu des éléments de commande (37) associés individuellement aux groupes de fonctions primaires (22) pour la sélection de groupes de fonctions primaires (22), en particulier pour la sélection de dispositifs et/ou de groupes de dispositifs raccordés.

14. Dispositif de commande multifonction selon l'une quelconque des revendications 1 à 13, **caractérisé en ce que** l'élément rotatif bidirectionnel (11) est enfoncé dans une surface (20) d'une pièce de véhicule dans une mesure telle que l'élément rotatif (11) puisse être bien commandé et que l'axe de rotation soit déjà situé en dessous de la surface (20) de la pièce de véhicule.

15. Dispositif de commande multifonction selon l'une quelconque des revendications 1 à 14, **caractérisé en ce que** l'élément rotatif bidirectionnel (11) avec au moins le deuxième dispositif de commande (12, 13) est séparé spatialement et structurellement du dispositif d'affichage.
